Europäisches Patentamt

European Patent Office

Office européen des brevets

(19)

(11) Veröffentlichungsnummer: **0 004 329**
A1

(12) **EUROPÄISCHE PATENTANMELDUNG**

(21) Anmeldenummer: 79100729.7

(22) Anmeldetag: 12.03.79

(51) Int. Cl.²: **B 60 R 1/06**

(30) Priorität: 17.03.78 DE 2811599
11.07.78 DE 2830340

(43) Veröffentlichungstag der Anmeldung: 03.10.79
Patentblatt 79/20

(84) Benannte Vertragsstaaten: BE DE FR GB IT NL SE

(71) Anmelder: **Hagus C. Luchtenberg GmbH & Co. KG,
Wiesenstrasse 8-10, D-5650 Solingen-Wald (DE)**

(72) Erfinder: **Luchtenberg, Curt, Sonnenschein 41, D-5650
Solingen 19 (DE)**

(74) Vertreter: **Selting, Günther, Dipl.-Ing. et al,
Deichmannhaus am Hauptbahnhof, D-5000 Köln 1 (DE)**

(54) **Zusatzrückspiegel für Kraftfahrzeuge.**

(57) Ein Zusatzspiegel für ein Kraftfahrzeug mit einer am
Fahrzeug lösbar zu befestigenden Halterung weist einen
das Spiegelgehäuse (27) tragenden Bügel auf. Das obere
Ende der Halterung umgreift mit einer Klemmvorrichtung
(16) die Oberkante (12) einer Fahrzeugtür (10). Das untere
Ende stützt sich mit einer Abstützvorrichtung (18) beispielsweise an dem Karosserieblech (11) des Fahrzeugs
oder an der Unterkante des Fensters (13) ab.

## Zusatzrückspiegel für Kraftfahrzeuge

Die Erfindung betrifft einen Zusatzrückspiegel für Kraftfahrzeuge, mit einer am Fahrzeug lösbar zu befestigenden Halterung, die einen das Spiegelgehäuse tragenden Bügel aufweist und deren oberes Ende die Oberkante einer Fahrzeugtür umgreift.

Zusatzrückspiegel werden beispielsweise benötigt, wenn das Fahrzeug einen breiten Wohnwagenanhänger zieht, damit der Fahrer durch den Zusatzrückspiegel an dem Wohnwagenanhänger vorbei nach hinten blicken kann. Die das Spiegelglas enthaltenden Spiegelgehäuse der Zusatzrückspiegel müssen daher seitlich relativ weit vom Fahrzeug abstehen und vibrationsfrei befestigt werden. Das Anschrauben an der Fahrzeugkarosserie ist nachteilig, weil hierdurch das Karosserieblech beschädigt wird.

Telefon: (02 21) 13 10 41 · Telex: 888 2307 dopa d · Telegramm: Dompatent Köln

Es sind Zusatzrückspiegel bekannt, die an den serienmäßig angebrachten Fahrzeugspiegeln mit einer Klemmhalterung befestigt werden. Bei anderen bekannten Zusatzrückspiegeln weist die Halterung eine gebogene Platte auf, die durch den Spalt zwischen Motorhaube und Kotflügel hindurchragt und im Inneren des Motorraumes befestigt werden kann. An dem äußeren Ende der Platte befindet sich der das Spiegelgehäuse tragende Spiegelarm.

Die bekannten Zusatzrückspiegel sind bei Verwendung hinreichend großer Spiegelgehäuse in der Regel nicht vibrationsfrei zu befestigen. Je weiter das Spiegelgehäuse seitlich vom Fahrzeug absteht, umso größer muß der Spiegel sein. Je länger das Gestänge und je größer der Spiegel ist, umso schwieriger ist es, den Zusatzrückspiegel möglichst starr am Fahrzeug anzubringen.

Es ist ein Zusatzrückspiegel bekannt (US-Patent 3 857 539), der an seinem oberen und an seinem unteren Ende Haken aufweist, die die Oberkante bzw. die Unterkante einer Fahrzeugtür übergreifen. An der Halterung sind ferner Mittelstützen angebracht, die von außen her gegen die Fahrzeugtür drücken und bewirken, daß die Halterung in Richtung vom Fahrzeug fort gespannt wird, so daß die Haken unter Spannung an den betreffenden Kanten der Tür angreifen. Hierbei ist die äußere Abstützung nachteilig, weil sie gegen den Lack der Fahrzeugtür drückt und bei Vibrationen Beschädigungen hervorrufen kann. Außerdem kann die Abstützung das Türblech eindrücken.

Aufgabe der Erfindung ist es, einen Zusatzrückspiegel zu schaffen, der am Fahrzeug angebracht werden kann, ohne daß das Fahrzeug durch Bohren von Löchern oder dgl. verändert werden müßte, und dessen Halterung eine feste und flatterfreie Anbringung, auch bei seitlich weit vom Fahrzeug abstehendem Spiegelgehäuse, ermöglicht. Ferner soll die Halterung an der Fahrzeugtür so anzubringen sein, daß keine gegen das Türblech drückende Abstützung erforderlich ist.

Zur Lösung dieser Aufgabe ist erfindungsgemäß vorgesehen, daß bei einem Zusatzrückspiegel der eingangs genannten Art die Halterung eine die Oberkante der Fahrzeugtür einspannende Klemmvorrichtung aufweist.

Der Zusatzrückspiegel wird an der Fahrzeugtür befestigt, indem deren Oberkante von der Klemmvorrichtung umgriffen wird. Damit ist eine feste und zuverlässige Aufhängung der Halterung gewährleistet. Eine zweite Einspannung der Halterung an ihrem unteren Ende ist nicht mehr erforderlich. Hier genügt vielmehr eine Abstützvorrichtung, mit der sich die Halterung beispielsweise an dem Karosserieblech des Fahrzeugs oder an der Unterkante des Fensters abstützt.

0004329

In vorteilhafter Weiterbildung der Erfindung kann vorgesehen sein, daß die Halterung an ihrem unteren Ende eine Abstützvorrichtung aus einem an dem Türblech zu befestigenden Sauger aufweist. Während die Halterung mit der Klemmvorrichtung an der Oberkante der Fahrzeugtür befestigt ist, dient die Abstützung lediglich dazu, die Halterung in einer definierten Position zu halten, indem sie sich mit dem Sauger gegen das Türblech legt. Das Türblech ist somit nicht der Wirkung einer Spannvorrichtung ausgesetzt, sondern es dient lediglich als Anlagefläche für den Sauger zur Erzielung einer definierten Position der Halterung.

Alternativ kann auch eine Abstützvorrichtung mit einem die Tür untergreifenden Haken vorgesehen sein. In diesem Fall entfällt der an der Türfläche angreifende Sauger.

Die Halterung kann aus einer Stange bestehen, an derem oberen Ende die Klemmvorrichtung und an derem unteren Ende die Abstützvorrichtung jeweils mit Gelenken angebracht sind, die ein seitliches Verschwenken und Anlegen der Halterung an die Fahrzeugkarosserie ermöglichen.

Die Sicherheitsvorschriften vieler Länder schreiben vor, daß vom Fahrzeug abstehende Teile bei einem Unfall nachgeben und sich flach an die Karosserie anlegen müssen.

Um dies zu erreichen, kann die Spiegelstange relativ zu der Halterung um eine im wesentlichen vertikale Achse schwenkbar sein. Der Spiegel kann also durch Verschwenken der Spiegelstange um die genannte Achse herum an die Fahrzeugkarosserie herangeklappt werden.

Zur Erhöhung der Vibrationsstabilität der Spiegelstange kann die Stange der Halterung mit der Spiegelstange durch eine zusätzliche Querstrebe verbunden sein. Diese Querstrebe kann aus einer winklig gebogenen Stange bestehen, die an mindestens einem Ende mit einem Schiebeelement verbunden ist, das auf der Stange der Halterung bzw. auf der Spiegelstange verschiebbar ist.

Damit kann die Spiegelstange auch auf unterschiedliche Neigungen gegenüber der Horizontalen eingestellt werden. Wird die Neigung der Spiegelstange verändert, dann verschiebt sich das Schiebeelement entsprechend. Damit kann z.B. die Spiegelhöhe verändert werden. Andererseits ermöglicht das Schiebeelement das seitliche Anklappen des Zusatzrückspiegels an die Fahrzeugkarosserie bei Vorhandensein einer Querstrebe. Wenn der Winkel zwischen der Stange der Halterung und der Spiegelstange nicht 90° beträgt, ist bei einer Verschwenkung der Spiegelstange in bezug auf die Halterung eine freie Verschiebbarkeit des einen Endes der Querstrebe erforderlich.

Die verschiedenen Fahrzeugtypen haben unterschiedlich breite und unterschiedlich geformte Fensterleisten, die von der Klemmvorrichtung übergriffen werden müssen. Um eine Anpassung an möglichst viele Fahrzeugtypen zu ermöglichen, weist die Klemmvorrichtung zweckmäßigerweise ein die Fensterleiste übergreifendes erstes Klemmteil, ein in dem ersten Klemmteil verstellbares, seitlich an die Fensterleiste andrückbares zweites Klemmteil, und ein von unten gegen die Fensterleiste drückendes drittes Klemmteil auf. Damit findet eine doppelte Klemmung, nämlich einmal in seitlicher Richtung und einmal in vertikaler Richtung statt.

Das Festspannen des ersten Klemmteils und des zweiten Klemmteils kann gleichzeitig mit einem einzigen Spannelement erfolgen, wenn gemäß einer vorteilhaften Weiterbildung der Erfindung eine Schraube durch das zweite Klemmteil hindurchgeht und mit ihrem Kopf, der an seiner Unterseite eine Abschrägung aufweist, an einer Schrägfläche des ersten Klemmteiles abgestützt ist.

Durch Festziehen der Schraube wird die Abschrägung des Schraubenkopfes gegen die Schrägfläche gedrückt, so daß die Schraube sich unter der Keilwirkung der Schrägfläche verschiebt. Dadurch wird das zweite Klemmteil mitgenommen, das sich seitlich gegen das Profilteil legt. Das Profilteil wirkt als Anschlag und verhindert schließlich die weitere seitliche Bewegung des zweiten Klemmteils. Beim weiteren Festziehen der Schraube wird das dritte Klemmteil gegen das zweite Klemmteil bewegt und drückt schließlich gegen die Unterseite des Profilteils. Auf diese Weise erfolgt die Verspannung der Klemmvorrichtung an dem Profilteil, das von drei Seiten her mit Spannung umgriffen wird.

Vorzugsweise besteht der Kopf der Schraube aus einem Querstab, der sich gleichzeitig an zwei beidseitig eines Schlitzes des ersten Klemmteiles angeordneten Schrägflächen abstützt. Dadurch werden Verkantungen der Schraube an dem ersten Klemmteil vermieden und außerdem erfolgt eine Drehsicherung der Schraube in bezug auf das erste Klemmteil. Ein weiterer Vorteil besteht darin, daß relativ große Stützflächen vorhanden sind, wodurch die Flächenpressung verringert wird.

In weiterer Ausgestaltung der Erfindung können mehrere Schrägflächen sägezahnförmig hintereinander angeordnet sein, um eine Anpassung an verschiedene Weiten von Profilteilen zu ermöglichen. Damit wird gleichzeitig die Höhe der Schrägflächen und damit die Bauhöhe des ersten Klemmteiles möglichst geringgehalten.

Das erste Klemmteil kann seitliche Wangen aufweisen, in denen Führungsschienen zur Aufnahme von Führungszapfen des zweiten Klemmteiles vorgesehen sind. Wenn das zweite Klemmteil mit zwei Paaren von Führungszapfen ausgestattet ist, von denen jeweils die Führungszapfen eines Paares entlang einer gemeinsamen Achse angeordnet sind, entsteht eine verkantungsfreie Führung, durch die die Einhaltung der richtigen Orientierung des zweiten Klemmteiles gegenüber dem ersten Klemmteil sichergestellt ist.

Um Verdrehungen und Verkantungen des zweiten Klemmteiles zu verhindern, weist die Schraube vorzugsweise einen unrunden Schaftteil auf, der in einer Durchführungsöffnung des zweiten Klemmteiles unverdrehbar geführt ist.

Im folgenden werden einige Ausführungsbeispiele der Erfindung unter Bezugnahme auf Figuren näher erläutert.

Figur 1 zeigt eine Rückansicht einer ersten Ausführungsform des Zusatzrückspiegels,

Figur 2 zeigt einen Querschnitt durch die Klemmvorrichtung des Zusatzrückspiegels der Figur 1,

Figur 3 zeigt eine Ansicht der Klemmvorrichtung aus Richtung des Pfeiles III in Figur 2,

Figur 4 zeigt eine Frontansicht einer zweiten Ausführungsform des Zusatzrückspiegels,

Figur 5 einen Längsschnitt durch die Klemmvorrichtung nach Figur 4,

Figur 6 eine Draufsicht der Klemmvorrichtung nach Figur 4 und

Figur 7 einen Querschnitt entlang der Linie VII-VII von Figur 6.

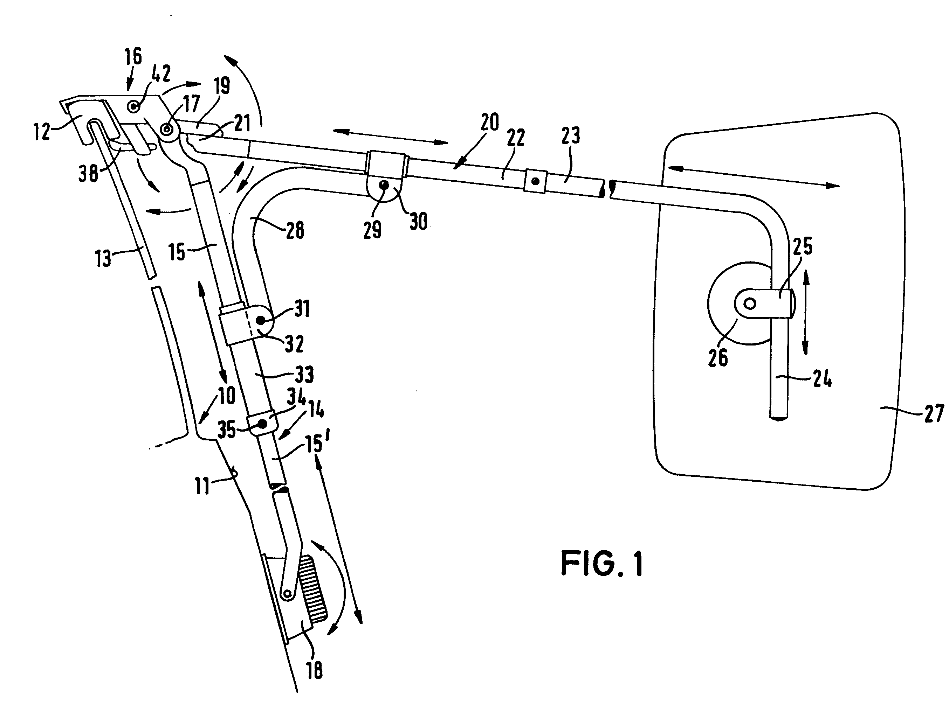

Der dargestellte Zusatzrückspiegel nach Figuren 1 bis 3 wird an einer Fahrzeugtür 10 befestigt. Man erkennt in Figur 1 beispielsweise das Türblech 11 und die obere Fensterleiste 12, die die Oberkante der Fahrzeugtür bildet, sowie das Fensterglas 13.

Die Halterung des Zusatzspiegels besteht aus einer Teleskopstange 14 mit dem Innenrohr 15' und dem Außenrohr 15.

An dem oberen Ende der Teleskopstange 14 ist die Klemmvorrichtung 16 über ein Gelenk 17 montiert, und an dem unteren Ende der Teleskopstange ist gelenkig die aus einem Gummi-Saugnapf 18 bestehende Abstützvorrichtung angelenkt. Während die Klemmvorrichtung 16 die Fensterleiste 12 übergreift und an dieser fest blockiert ist, ist der Saugnapf 18 flach an das Türblech 11 angelegt, wo er sich festsaugt.

An der von einem Stift oder einer Schraube gebildeten horizontalen Gelenkachse 17 ist außer der Klemmvorrichtung 16 ein weiteres Gelenkteil 19 angebracht. Dieses kann entweder separat um die Gelenkachse 17 herum verschwenkbar und festklemmbar sein, oder es kann mit dem Endstück der Teleskopstange 14 fest verbunden sein. Das Gelenkstück 19 trägt die Spiegelstange 20, mit der es über eine im wesentlichen vertikale Gelenkachse 21 verbunden ist. Die Spiegelstange 20 ist ebenfalls als Teleskopstange ausgebildet und besteht aus dem Außenrohr 22 und dem Innenrohr 23. Das äußere Ende 24 des Innenrohres 23 ist nahezu rechtwinklig nach unten abgebogen. Es bildet das äußere Ende der Spiegelstange und trägt eine Schelle 25, die das Kugelgelenk 26 trägt, um das das Spiegelgehäuse 27 verschwenkt werden kann.

Zur Sicherung gegen Vibrationen ist die Spiegelstange 20 über die Querstrebe 28 mit der Teleskopstange 14 verbunden. Die Querstrebe 28 ist über eine Klemmschraube 29 mit einer Schelle 30 verbunden, die das Außenrohr der Spiegelstange 20 umgibt. Durch Lockern der Klemmschraube 29 kann die Schelle 30 auf der Spiegelstange 20 verschoben werden, so daß sie in einer geeigneten Position festgeklemmt werden kann. Auf diese Weise läßt sich die Neigung der Spiegelstange 20 verändern.

Das andere Ende der Querstrebe 28 ist ebenfalls mit einer Klemmschraube 31 an einer Schelle 32 angebracht. Die Schelle 32 ist um eine Hülse 33 herumgelegt, die auf dem Außenrohr 15 der Teleskopstange 14 verschiebbar ist. Die Schelle 32 umgreift die Hülse 33 fest, jedoch ist ihre Position, in der sie auf der Hülse festgeklemmt wird, veränderbar.

Die Hülse 33 stützt sich auf einem Anschlagring 34 ab, der am unteren Ende des Außenrohres 15 angebracht ist. Die durch den Anschlagring 34 hindurchgehende Schraube 35 dient gleichzeitig zum gegenseitigen Festklemmen der beiden Teleskoprohre 15 und 16.

Trifft ein Stoß parallel zur Fahrzeugachse auf den Zusatzrückspiegel, dann wird die Spiegelstange 20 um die Gelenkachse 21 herum geschwenkt, so daß der Zusatzrückspiegel flach an das Fahrzeug angeklappt wird. Dabei schiebt sich die Hülse 33 auf der Teleskopstange 14 bzw. dem Außenrohr 15 nach oben, so daß die Bewegung der Spiegelstange nicht durch die Strebe 28 behindert wird, obwohl der Winkel zwischen den beiden Stangen 14 und 20 kein rechter Winkel ist.

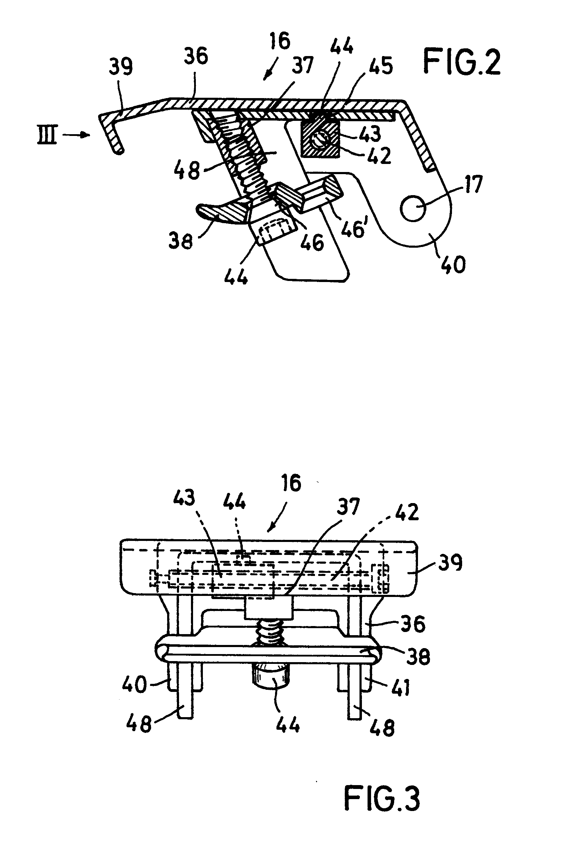

Die erste Ausführungsform der Klemmvorrichtung 16 ist in den Figuren 2 und 3 detaillierter dargestellt. Sie besteht aus einem ersten Klemmteil 36, einem zweiten Klemmteil 37 und einem dritten Klemmteil 38. Das erste Klemmteil 36 übergreift mit einer vorspringenden und abgewinkelten Nase 39 die Fensterleiste 12 und bildet außerdem das Gelenkteil, an dem die Teleskopstange 14 und das weitere Gelenkteil 19 mit der Gelenkachse 17 angelenkt sind. Zu diesem Zweck weist das erste Klemmteil 36 zwei Backen 40 und 41 auf, die miteinander fluchtende Bohrungen für die Gelenkachse 17 haben.

Zwischen den Backen 40 und 41 befindet sich eine Schraubenspindel 42, die mit einem Schlitten 43 zusammenwirkt. Dieser Schlitten 43 weist einen Zapfen 44 auf, der in einen schrägen Schlitz 45 in der Platte des zweiten Klemmteiles 37 hineinragt. Wird durch Drehen der Schraubenspindel 42 der Schlitten 43 parallel zur Schraubenspindel 42 verfahren, so bewegt sich das zweite Klemmteil 37 infolge des schrägen Verlaufs des Schlitzes 45 quer zur Richtung der Schraubenspindel 43, d.h. es bewegt sich in Richtung auf das vordere Ende 39 des ersten Klemmteiles. Das zweite Klemmteil 37 ist innerhalb des ersten Klemmteiles 36 so geführt, daß es sich nur in dieser einen Richtung bewegen kann.

An dem zweiten Klemmteil 37 ist mit einer Schraube 44 das dritte Klemmteil 38 befestigt. Dieses dritte Klemmteil besteht aus einer im wesentlichen T-förmigen Platte, die zwei Löcher 46,46' aufweist, durch die die Schraube 44 wahlweise hindurchgesteckt werden kann. Welches der Löcher 46,46' benutzt wird, hängt von dem Typ des jeweiligen Fahrzeugs bzw. der Ausbildung der Fensterleiste 12 ab. Der Querbalken der T-förmigen Platte 38 wird von zwei schrägen Führungskanten 48, die zueinander parallel verlaufen, abgestützt, so daß das dritte Klemmteil 38 beim Festziehen der Schraube 44 gegen Verdrehungen gesichert ist.

Bei der Montage der Klemmvorrichtung 16 wird diese zunächst über die Fensterleiste 12 gelegt. Anschließend wird durch Drehen der Schraubenspindel 42 das zweite Klemmteil 37 in Richtung auf die Umbiegung 39 vorgeschoben, bis die Fensterleiste seitlich eingeklemmt ist. Anschließend wird durch Drehen der Schraube 44 das dritte Klemmteil 38 hochgefahren, das die Fensterleiste 12 untergreift, so daß die Fensterleiste von insgesamt drei Seiten her eingespannt ist. Selbstverständlich ist das vordere Ende des ersten Klemmteiles 36, mit dem die Fensterleiste übergriffen wird, ziemlich dünn, so daß beim Zuschlagen der Tür keine Beschädigungen auftreten und das Blech des Klemmstückes sich ohne Schwierigkeiten in die Türdichtung eindrücken kann.

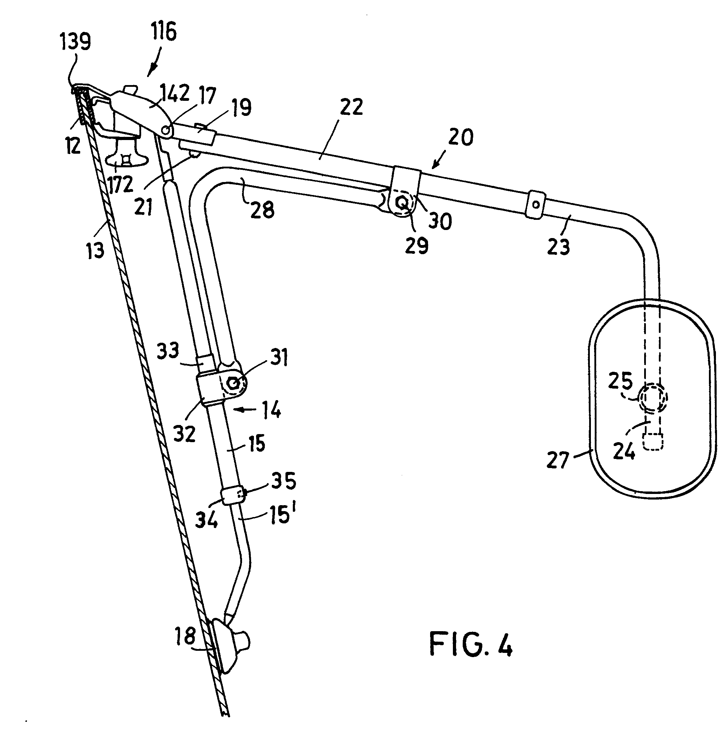

Der Zusatzrückspiegel der Figuren 4 bis 7 entspricht bis auf die Konstruktion der Klemmvorrichtung im wesentlichen demjenigen der Figuren 1 bis 3. Daher beschränkt sich die nachfolgende Beschreibung dieses Ausführungsbeispiels auf die Klemmvorrichtung 116.

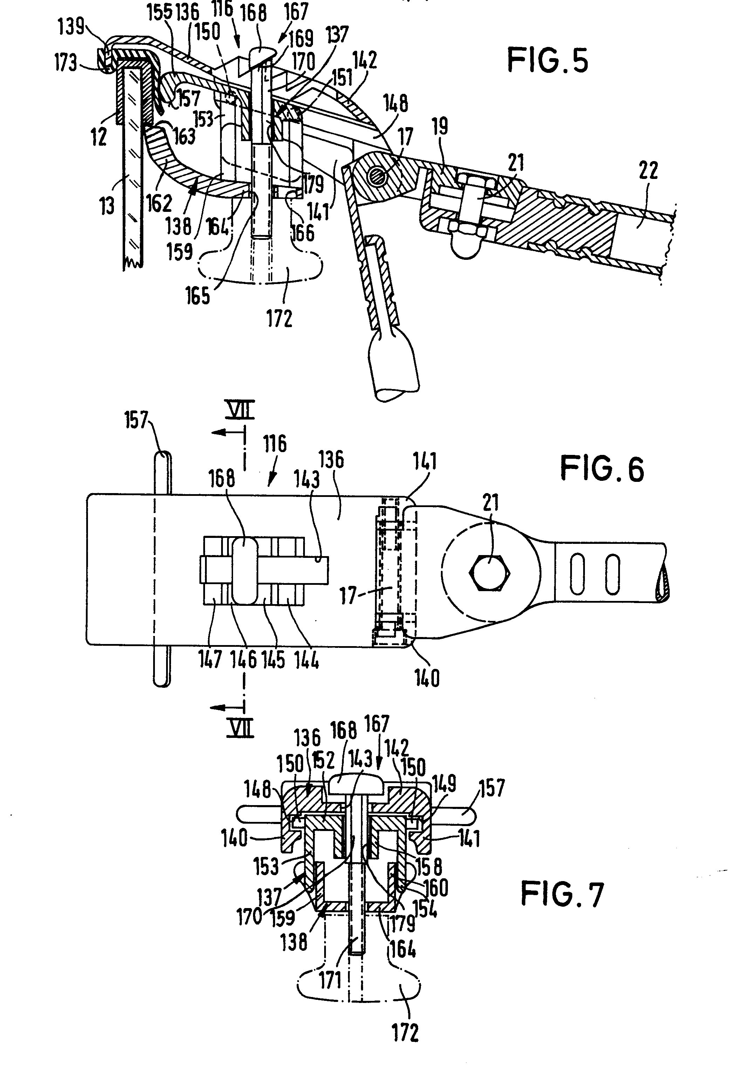

Die Klemmvorrichtung 116 ist in den Figuren 5, 6 und 7 detaillierter dargestellt. Sie besteht aus einem ersten Klemmteil 136, einem zweiten Klemmteil 137 und einem dritten Klemmteil 138. Das erste Klemmteil 136 übergreift mit einer vorspringenden und abgewinkelten Nase 139 die Fensterleiste 12 und bildet außerdem das Gelenkteil, an dem die Teleskopstange 14 und das weitere Gelenkteil 19 mit der Gelenkachse 17 angelenkt sind. Zu diesem Zweck weist das erste Klemmteil 136 zwei Backen 140 und 141 auf, die miteinander fluchtende Bohrungen für die Gelenkachse 17 haben.

Das erste Klemmteil 136 weist einen nach oben aufragenden verdickten Rücken 142 auf, in dem sich ein Längsschlitz 143 befindet. Seitlich neben dem Längsschlitz 143 sind sägezahnförmig vier Schrägflächen 144, 145, 146 und 147 angeordnet, die quer zur Längsrichtung des Schlitzes 143 verlaufen und jeweils mit einem Teil rechts und mit einem anderen Teil links von dem Längsschlitz 143 liegen.

An den Innenseiten der beiden Backen 140 und 141, die im Bereich des Rückens 142 von dem ersten Klemmteil 136 nach unten abstehen, sind nutenförmige Führungsschienen 148, 149 angeordnet, in die zwei Paare von Führungszapfen 150, 151 des zweiten Klemmteiles 137 hineinragen. Die Führungszapfen 150 befinden sich in Längsrichtung etwa in der Mitte des zweiten Klemmteiles, und die Führungszapfen 151 am rückwärtigen Ende des zweiten Klemmteiles.

Wie aus Figur 7 hervorgeht, ist das zweite Klemmteil in seiner rückwärtigen Hälfte etwa U-förmig ausgebildet, wobei seine Basisplatte 152 unterhalb des Rückens 142 des ersten Klemmteiles liegt, und die Schenkelplatten 153, 154, von deren oberen Bereichen die Führungszapfen 150, 151 nach außen abstehen, nach unten weisen. Die Basisplatte 152 weist einen nach vorne ragenden Ansatz 155 auf, der an seinem vorderen Ende 156 eine T-förmige Verbreiterung 157 besitzt, die nach beiden Seiten hin vorsteht. Das vordere Ende des Ansatzes 155 ist, wie aus Figur 5 hervorgeht, etwa rechtwinklig nach unten umgebogen, so daß eine Anschlagfläche entsteht, die sich seitlich gegen das Profilteil 12 legt.

Von der Basisplatte 152 steht gemäß Figur 7 ein Führungszylinder 158 nach unten ab. Dieser Führungszylinder weist
eine durchgehende vertikale Sechskantbohrung 179 auf.

Das dritte Klemmteil 138 weist ebenfalls einen U-förmigen
Abschnitt auf, dessen Schenkel 159, 160 nach oben weisen
und zwischen die Schenkel 153 und 154 des zweiten Klemmteiles ragen. Ein nach vorne weisender Vorsprung 162 des
dritten Klemmstücks 138 ist leicht nach oben gebogen und
er weist an seinem Ende eine nutförmige Vertiefung 163 auf,
die sich von unten her gegen die Kante des Profilteils 12
legen kann. Im rückwärtigen Bereich des dritten Klemmteils
138 befinden sich zwei durch die Basisplatte 164 hindurchgehende Öffnungen 165, 166.

Durch den Schlitz 143 des ersten Klemmteiles 136, die
Sechskantbohrung 179 des zweiten Klemmteiles 137 und eines
der Löcher 165 oder 166 des dritten Klemmteiles 138 geht
die Schraube 167 hindurch. Der Kopf 168 dieser Schraube
ist stabförmig ausgebildet. Er befindet sich quer über
dem Schlitz 143 und liegt an einer der sägezahnförmigen
Schrägflächen 144 bis 147 mit einer Abschrägung 169 (Figur 5), die sich an seiner Unterseite zu beiden Seiten
des Schaftes 170 befindet, an. Der Schaft 170 hat in seinem oberen Bereich Sechskantquerschnitt, der der Sechskantbohrung 179 des zweiten Klemmteiles 137 angepaßt ist,
so daß der Schaft 170 gegenüber dem zweiten Klemmteil 137
gegen Verdrehung gesichert ist. Der Schaft ist allerdings
in der Sechskantbohrung 159 in Längsrichtung verschiebbar.
Sein durch die Basisplatte 164 des dritten Klemmteiles 138
hindurchgehendes unteres Ende 171 ist zylindrisch und mit einem Gewinde versehen. Auf dieses Gewinde ist eine Flügelmutter 172 aufgeschraubt.

Bei der Montage der Klemmvorrichtung wird das erste Klemmteil 136 so auf das Profilteil 12 aufgesetzt, daß seine Nase 139 das Profilteil übergreift. Zur Schonung des Profilteils 12 ist das vordere Ende des ersten Klemmteiles 136 mit einer weichen Unterlage 173 aus Gummi oder Kunststoff unterlegt. Die Unterlage 173 legt sich auch an diejenige Seite des Profilteils 12 an, gegen die die Nase 157 des zweiten Klemmteils 137 seitlich stößt, und sie kann auch zwischen das Profilteil 12 und die Angriffsfläche des dritten Klemmteils 138 gelegt werden.

Die Klemmvorrichtung 116 wird gemäß Figur 5 an das Profilteil 12 angesetzt, wobei die Schraube 167 mit ihrer Abschrägung 169 an diejenige Schrägfläche 144 bis 147 angelegt wird, die die größte Annäherung der Nase 157 des zweiten Klemmteiles an das Profilteil 12 erlaubt. Dabei wird das zweite Klemmteil 137 mit seinen Führungszapfen 150, 151 in den Führungsschienen 148, 149 des ersten Klemmteiles verschoben. Beim Festziehen der Flügelmutter 172 bewegt sich das Klemmteil 137 in Richtung auf das Profilteil 12, während die Abschrägung 169 auf der betreffenden Schrägfläche 144 bis 147 gleitet. Gleichzeitig wird das dritte Klemmteil 138 von unten her gegen das Profilteil 12 gedrückt. Durch Anziehen der einzigen Schraube 167 wird damit das Profilteil 12 von drei Seiten her fest umspannt.

0004329

- 1 -

<u>A n s p r ü c h e</u>

1. Zusatzrückspiegel für Kraftfahrzeuge, mit einer am
Fahrzeug lösbar zu befestigenden Halterung, die einen
das Spiegelgehäuse tragenden Bügel aufweist und deren
oberes Ende die Oberkante einer Fahrzeugtür umgreift,
d a d u r c h  g e k e n n z e i c h n e t, daß die
Halterung eine die Oberkante der Fahrzeugtür einspannende Klemmvorrichtung (16) aufweist.

2. Zusatzrückspiegel nach Anspruch 1, dadurch gekennzeichnet, daß die Halterung an ihrem unteren Ende eine Abstützvorrichtung (18) aus einem an dem Türblech (11) zu
befestigenden Sauger (18) aufweist.

3. Zusatzrückspiegel nach Anspruch 1, dadurch gekennzeichnet, daß die Halterung einen die Fahrzeugtür untergreifenden Haken aufweist.

4. Zusatzrückspiegel nach einem der Ansprüche 1 bis 3,
dadurch gekennzeichnet, daß die Halterung aus einer
Stange (14) besteht, an deren oberem Ende die Klemmvorrichtung (16) und an deren unterem Ende die Abstützvorrichtung (18) jeweils mit Gelenken angebracht
sind, die ein seitliches Verschwenken und Anlegen an
die Fahrzeugkarosserie ermöglichen.

5. Zusatzrückspiegel nach Anspruch 1, dadurch gekennzeichnet, daß der Bügel im wesentlichen die Form eines Winkelstückes hat, dessen beide Schenkel teleskopisch ausziehbar und feststellbar sind.

6. Zusatzrückspiegel nach einem der vorhergehenden Ansprüche, dadurch gekennzeichnet, daß eine von der Halterung seitlich abstehende, das Spiegelgehäuse (27)
   tragende Spiegelstange (20) vorgesehen ist.

7. Zusatzrückspiegel nach Anspruch 6, dadurch gekennzeichnet, daß die Spiegelstange (20) relativ zu der Halterung (14) um eine im wesentlichen vertikale Achse (21)
   schwenkbar ist.

8. Zusatzrückspiegel nach einem der Ansprüche 1 bis 7,
   dadurch gekennzeichnet, daß die Stange (14) der Halterung mit der Spiegelstange (20) durch eine zusätzliche
   Querstrebe (28) verbunden ist.

9. Zusatzrückspiegel nach Anspruch 8, dadurch gekennzeichnet, daß die Querstrebe (28) aus einer winklig gebogenen Stange besteht, die an mindestens einem Ende mit
   einem Schiebeelement (33) verbunden ist, das auf der
   Stange (14) der Halterung bzw. auf der Spiegelstange
   (20) verschiebbar ist.

10. Zusatzrückspiegel nach einem der Ansprüche 1 bis 9,
    dadurch gekennzeichnet, daß die Stange (14) der Halterung und/oder die Spiegelstange (20) teleskopierbar
    ist.

11. Zusatzrückspiegel nach einem der Ansprüche 1 bis 10,
    dadurch gekennzeichnet, daß die Klemmvorrichtung (16)
    ein die Fensterleiste (12) übergreifendes erstes Klemmteil (36), ein in dem ersten Klemmteil verstellbares, seitlich an die Fensterleiste andrückbares zweites
Klemmteil (37) und ein von unten gegen die Fensterleiste drückendes drittes Klemmteil (38) aufweist.

12. Zusatzrückspiegel nach Anspruch 11, dadurch gekennzeichnet, daß an dem ersten Klemmteil (36) eine Schrägführung (45) vorgesehen ist, in der ein das zweite
Klemmteil (37) führender Schlitten (43) verschiebbar
ist, und daß der Antrieb des Schlittens (43) über eine
in dem ersten Klemmteil (36) gelagerte Schraubspindel
(42) erfolgt.

13. Zusatzrückspiegel nach Anspruch 11, dadurch gekennzeichnet, daß eine Schraube (167) durch das zweite
Klemmteil (137) hindurchgeht und mit ihrem Kopf (168),
der an seiner Unterseite eine Abschrägung (169) aufweist, an einer Schrägfläche (144 bis 147) des ersten
Klemmteils (136) abgestützt ist.

14. Zusatzrückspiegel nach Anspruch 13, dadurch gekennzeichnet, daß der Kopf (169) der Schraube (167) aus
einem Querstab besteht, der sich gleichzeitig an zwei
beidseitig eines Schlitzes (143) angeordneten Schrägflächenteilen abstützt.

15. Zusatzrückspiegel nach Anspruch 13 oder 14, dadurch
gekennzeichnet, daß mehrere Schrägflächen (144 bis 147)
sägezahnförmig hintereinander angeordnet sind.

16. Zusatzrückspiegel nach einem der Ansprüche 13 bis 15,
dadurch gekennzeichnet, daß das erste Klemmteil (136)
seitliche Wangen (140, 141) aufweist, in denen Führungs-

schien (148, 149) zur Aufnahme von Führungszapfen
(150, 151) des zweiten Klemmteiles vorgesehen sind.

17. Zusatzrückspiegel nach einem der Ansprüche 13 bis 16,
dadurch gekennzeichnet, daß die Schraube (167) einen
unrunden Schaftteil (170) aufweist, der in einer Durchführungsöffnung (159) des zweiten Klemmteiles (137) unverdrehbar geführt ist.

FIG.1

0004329

FIG.2

FIG.3

FIG. 4

FIG.5

FIG.6

FIG.7

- 4/4 -

0004329

Europäisches
Patentamt

**EUROPÄISCHER RECHERCHENBERICHT**

0004329
Nummer der Anmeldung

EP 79 100 729.7

## EINSCHLÄGIGE DOKUMENTE

| Kategorie | Kennzeichnung des Dokuments mit Angabe, soweit erforderlich, der maßgeblichen Teile | betrifft Anspruch |
|-----------|--------------------------------------------------------------------------------------|--------------------|
| X | US – A – 2 856 814 (E.F. DILLMANN)  * Fig. 1 *  — | 1,2 |
|  | DE – A – 2 725 860 (N.G. JOHANSSON)  * Fig. 2 *  — | 1,4-7  10 |
|  | DE – A – 2 703 970 (RAYDYOT)  * Fig. 1 *  — | 2 |
|  | US – A – 3 501 123 (J.C. ABROMAVAGE et al.)  *Fig. 1 *  — | 3 |
|  | US – A – 3 488 026 (F. E. WALLACE et al.)  *Fig. 2 *  — | 3,5 |
|  | DE – U – 7 246 089 (HAGUS METALLWAREN-WERK)  * Fig. *  — | 4-8,10 |
| P | DE – U – 7 800 354 (HAGUS C. LUCHTEN-BERG)  * Fig. 2 *  — | 3 |
| D,A | US – A – 3 857 539 (H.H. KAVANAUGH)  * Fig. 1 *  —— | |

**KLASSIFIKATION DER ANMELDUNG (Int.Cl.²)**

B 60 R 1/06

**RECHERCHIERTE SACHGEBIETE (Int. Cl.²)**

B 60 R 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---------------|------------------------------|--------|
| Berlin | 07-06-1979 | BECKER |

EPA form 1503.1  06.78